# FASCICULE DE BREVET EUROPEEN

(11) **EP 3 945 084 B1**
(45) Date de publication et mention de la délivrance du brevet: **12.07.2023**
(21) Numéro de dépôt: 21184209.1
(22) Date de dépôt: 07.07.2021
(51) Int. Cl.: C05F 17/90, C05F 17/907, C05F 17/95

(54) **SYSTÈME DE COMPOSTAGE POUR DÉCHETS ORGANIQUES**
KOMPOSTIERSYTEM FÜR ORGANISCHE ABFÄLLE
COMPOSTING SYSTEM FOR ORGANIC WASTE

(30) Priorité: 27.07.2020 FR 2007924
(43) Date de publication de la demande: 02.02.2022
(73) Titulaire: UP FI Conseils, 69390 Vourles (FR)
(72) Inventeur: MAHAUT, Benoît, 69390 VOURLES (FR)
(74) Mandataire: Cabinet Beau de Loménie

(56) Documents cités:
- US-A1- 2003 059 931

## Description

### Domaine Technique

La présente invention concerne le domaine technique du traitement des déchets organiques en vue de l'obtention de compost.

L'objet de l'invention concerne plus précisément un système de compostage de déchets organiques selon la revendication 1 et un procédé de compostage selon la revendication 11.

### Technique antérieure

De nombreux systèmes de compostage de déchets organiques ont été proposés dans l'art antérieur. D'une manière générale, un système de compostage sert à encadrer la décomposition de déchets organiques pour obtenir du compost. Afin de répondre à une population croissante en zone urbaine, des systèmes de compostage peuvent être intégrés dans plusieurs types d'environnements, notamment en intérieur dans un appartement.

Par exemple, la demande de brevet EP 1 118 604 décrit un système de compostage permettant de séparer le compost dans différents compartiments de compostage selon son état de maturation. Pour cela, le système de compostage comporte plusieurs compartiments de compostage montés de manière superposée et séparés deux à deux par une paroi de séparation amovible. Le remplissage de déchets organiques se fait par le dessus du système dans le compartiment de compostage supérieur et la descente du compost est assurée lorsqu'une paroi de séparation amovible est tirée en-dehors du système de compostage. Cependant, un tel système ne permet pas d'assurer une bonne aération et humidification du compost. De plus, l'utilisation de ce système de compostage pose des problèmes à l'utilisateur car ce dernier ne peut pas accéder facilement au compost et à tous les états de maturation. Par ailleurs, le compost mûr ne peut pas être récupéré facilement.

Le document US 2003/059931 décrit un composteur comportant dans un boîtier, une série de tiroirs superposés permettant chacun de composter des déchets organiques par des lombrics. Chaque tiroir comporte un fond fixe pourvu d'ouvertures dimensionnées pour permettre au compost de les traverser. Une grille est montée dans chaque tiroir pour agiter le compost dans le fond du tiroir. Sous chaque tiroir, des plateaux sont positionnés pour récupérer le compost et les plateaux sont vidés de leur compost. Ce composteur ne permet pas de séparer le compost en fonction de son état de maturation de sorte qu'il est impossible de contrôler l'état de maturation du compost tout au long de son processus de compostage.

### Exposé de l'invention

L'objet de l'invention vise à remédier aux inconvénients de l'art antérieur en proposant un nouveau système de compostage pour déchets organiques destiné à être installé dans un environnement intérieur et extérieur et permettant de travailler le compost facilement et sans effort pour l'utilisateur tout en permettant de contrôler facilement son état de maturation tout au long du processus de compostage.

Pour atteindre un tel objectif, l'objet de l'invention concerne un système de compostage de déchets organiques comportant un châssis délimitant un espace dédié au compostage de déchets organiques.

Selon l'invention, le châssis délimite un espace dédié au compostage dans lequel sont disposés :
- un compartiment de compostage supérieur, monté sur le châssis et présentant à l'opposé d'un fond mobile, une section de réception pour les déchets organiques apte à être obturée par une paroi de fermeture, le fond mobile occupant soit une position ouverte délimitant une section d'évacuation pour les déchets organiques en laissant tomber le compost soit une position fermée pour obturer la section d'évacuation ;
- au moins un compartiment de compostage intermédiaire de type tiroir, disposé en dessous du compartiment de compostage supérieur, et présentant à l'opposé d'un fond mobile, une section d'ouverture adaptée pour recevoir les déchets provenant de la section d'évacuation du compartiment de compostage supérieur, ce compartiment de compostage intermédiaire étant monté sur le châssis par une liaison glissière d'axe horizontal lui permettant d'occuper soit une position rentrée dans laquelle la section d'ouverture est située à l'aplomb de la section d'évacuation du compartiment de compostage supérieur soit une position tirée hors du châssis pour accéder à l'intérieur du compartiment de compostage intermédiaire, le fond mobile occupant soit une position ouverte délimitant une section d'évacuation pour les déchets organiques en laissant tomber le compost soit une position fermée pour obturer la section d'évacuation ;
- un compartiment de compostage avec fond mobile comportant une liaison glissière entre un cadre et un fond mobile, la liaison glissière entre le cadre et le fond mobile d'un compartiment de compostage comportant des rails fixés sur l'intérieur des bords latéraux du fond mobile et coopérant avec des rails complémentaires fixés sur l'extérieur des parois latérales du cadre ;
- et un compartiment de compostage inférieur, disposé en bas de l'espace dédié au compostage, présentant une section d'ouverture située à l'aplomb de la section d'évacuation du compartiment de compostage intermédiaire situé au-dessus.

Selon l'invention, le système de compostage est peu encombrant et de conception simple. L'espace dédié au compostage comporte plusieurs compartiments de compostage séparés, permettant de séparer le compost selon son état de maturation. La séparation du compost assure un bon équilibre au sein du compost, une bonne aération, un maintien à un bon taux d'humidité, et par conséquent cela facilite la maturation du compost. Le transfert du compost d'un compartiment de compostage à un compartiment de compostage inférieur est effectué automatiquement sans opérations complexes de manipulation. Le fonctionnement du système de compostage étant simple et facilitant la maturation du compost, il nécessite peu d'intervention humaine et peu d'effort physique pour obtenir un compost mûr de bonne qualité. Cette invention trouve une application avantageuse dans un environnement extérieur comme dans un environnement intérieur, par exemple en appartement.

De plus, le système de compostage selon l'invention peut comporter en outre en combinaison au moins l'une et/ou l'autre des caractéristiques suivantes selon les revendications dépendantes 2 -10:
- la section d'évacuation d'un compartiment de compostage est aménagée de manière que sa projection verticale soit incluse dans la section d'ouverture du compartiment de compostage situé en dessous ;
- la paroi de fermeture est un couvercle ;
- le compartiment de compostage supérieur est de type tiroir, et la paroi de fermeture est fixe ;
- le fond mobile d'un compartiment de compostage est pourvu de trous d'évacuation et la liaison glissière entre le cadre et le fond mobile est pourvue d'un système de butée, de sorte qu'en position tirée du compartiment de compostage, les trous d'évacuations restent compris dans la section d'ouverture du compartiment de compostage situé en dessous ;
- le fond mobile d'un compartiment de compostage est formé d'une plaque de fond équipée de deux bords latéraux reliés par un panneau de façade, un système d'étanchéité étant aménagé entre le fond mobile et le cadre pour maintenir les déchets organiques à l'intérieur du compartiment de compostage ;
- la liaison glissière entre le compartiment de compostage de type tiroir et le châssis comporte un système de butée, empêchant le compartiment de compostage de sortir complètement du châssis ;
- le châssis comporte un bac de réserve pour matières sèches, disposé à proximité de l'espace dédié au compostage et présente une ouverture d'accès s'étendant dans un plan sensiblement coplanaire avec le plan de la section de réception du compartiment de compostage supérieur ;
- le bac de réserve est configuré pour recevoir une cartouche de matières sèches compressées ;
- et le châssis comporte une structure tubulaire équipée de panneaux d'habillage montés sur le châssis à l'aide d'un système de fixation amovible.

Un autre objet de l'invention concerne un procédé de compostage mis en oeuvre à l'aide d'un système conforme à l'invention. Le procédé consiste à :
- insérer des déchets organiques dans le compartiment de compostage supérieur ;
- prendre des matières dans le bac de réserve pour matières sèches et mélanger les matières avec les déchets organiques dans le compartiment de compostage supérieur ;
- accéder à l'intérieur du compartiment de compostage supérieur et vérifier l'état de maturation du compost ;
- tirer le fond mobile du compartiment de compostage supérieur vers l'extérieur du châssis pour ouvrir le compartiment de compostage supérieur et pour faire tomber le compost dans le compartiment de compostage intermédiaire situé en dessous ;
- tirer un compartiment de compostage intermédiaire de type tiroir pour accéder au compost, remuer le compost pour l'aérer, et humidifier le compost grâce au jus de compost transmis d'un compartiment de compostage supérieur à un compartiment de compostage intermédiaire situé en dessous à travers les trous d'évacuation ;
- tirer le fond mobile du compartiment de compostage intermédiaire vers l'extérieur du châssis pour ouvrir le compartiment de compostage intermédiaire et pour faire tomber le compost dans le compartiment de compostage inférieur ;
- répéter les opérations pour assurer la descente du compost vers les compartiments de compostage inférieurs en fonction de son état de maturation ;
- et récupérer le compost mûr dans le compartiment de compostage inférieur.

### Brève description des dessins

[Fig. 1]La Figure 1 est une vue générale en perspective d'un mode de réalisation du système de compostage selon l'invention.
[Fig. 2]La Figure 2 représente une vue générale en perspective du système de compostage habillé par des panneaux d'habillage.
[Fig. 3]La Figure 3 représente le compartiment de compostage intermédiaire ayant un fond mobile, dont le fond mobile occupe une position fermée.
[Fig. 4]La Figure 4 représente le compartiment de compostage intermédiaire ayant un fond mobile, dont le fond mobile occupe une position ouverte.
[Fig. 5]La Figure 5 est une vue générale en perspective du système de compostage représenté avec le fond mobile du compartiment de compostage supérieur occupant une position ouverte.
[Fig. 6]La Figure 6 est une vue générale en perspective du système de compostage représenté avec le compartiment de compostage intermédiaire en position tirée hors du châssis.

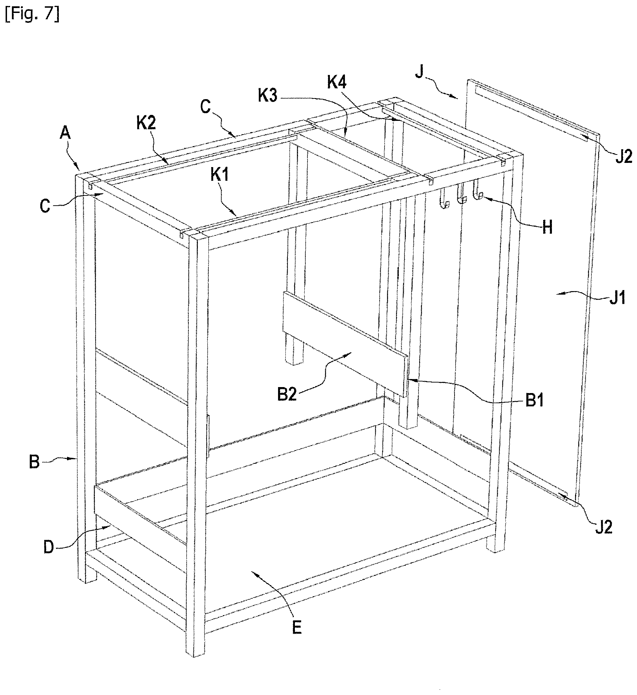

[Fig. 7]La Figure 7 est une vue en perspective représentant le châssis du système de compostage ainsi qu'un panneau d'habillage et son système de fixation correspondant.
[Fig. 8]La Figure 8 est une vue en perspective représentant la disposition des compartiments de compostage ainsi que la projection verticale des sections d'évacuation des compartiments de compostage.

### Description des modes de réalisation

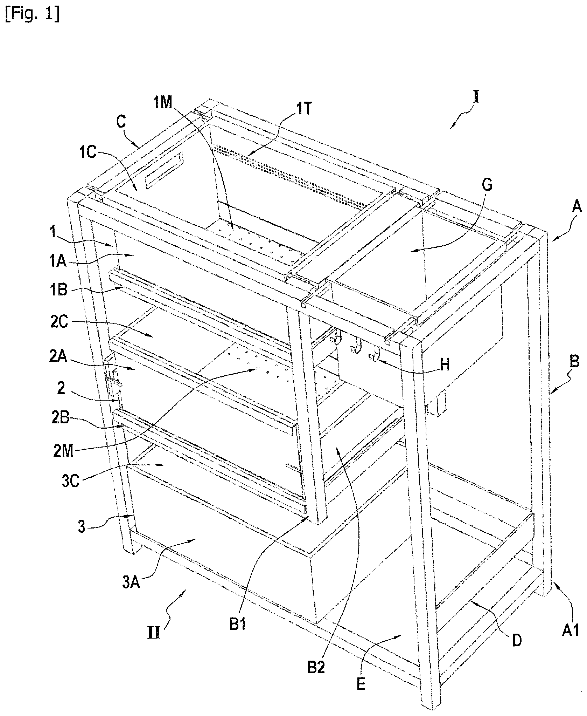

Tel que cela ressort de la Figure 1, l'objet de l'invention concerne un système de compostage I pour déchets organiques. Le système de compostage I s'inscrit dans une technique de compostage facilitant la maturation du compost, qui présente trois stades fondamentaux : le compost récent contenant un mélange entre des déchets organiques et des matières sèches, le compost en cours de maturation, et le compost mûr.

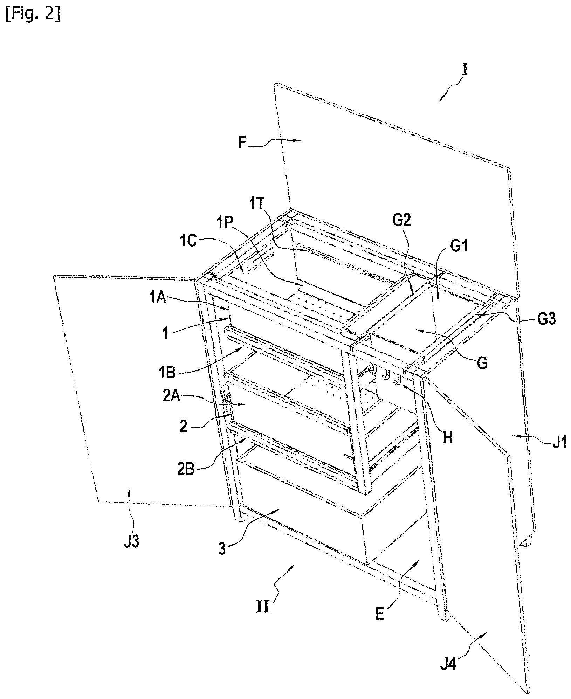

Le système de compostage I comporte un châssis A qui encadre un espace dédié au compostage II. Le châssis A peut se présenter sous différentes formes. Dans l'exemple illustré sur les dessins, le châssis A est formé par une structure tubulaire A1 destinée à être équipée de préférence de panneaux d'habillage J1, représentés sur la Figure 2. Par exemple, la structure tubulaire A1 est métallique pour des raisons de rigidité et de limitation de poids du système de compostage I. Comme décrit sur les Figures, la structure tubulaire A1 comporte par exemple quatre tubes verticaux B disposés de manière que la projection verticale des quatre tubes verticaux B forme un rectangle. Les tubes verticaux B sont reliés deux à deux du même côté par des tubes horizontaux C ou des traverses D pour renforcer la structure. Un plateau de fond E est monté sur le bas des quatre tubes verticaux B du châssis A et disposé en hauteur par rapport au sol pour délimiter l'extrémité inférieure de l'espace dédié au compostage II. Ce plateau E sert à surélever l'espace dédié au compostage II pour éviter l'ingérence de rongeurs ou autres animaux.

Selon un mode de réalisation, l'espace dédié au compostage II est disposé à l'intérieur de l'espace délimité par les quatre tubes verticaux B du châssis A, entre l'avant et l'arrière du système de compostage I, et entre le dessus du système de compostage I et le plateau de fond E. Selon une variante illustrée sur la Figure 1, le châssis A est pourvu de deux demi-tubes verticaux B1 chacun fixé sur un tube horizontal C pour séparer selon la largeur, l'espace intérieur du châssis A et délimiter l'espace dédié au compostage II entre les deux demi-tubes verticaux B1 et les deux tubes verticaux B situés par exemple sur la gauche du système de compostage I par rapport à la façade du système de compostage I.

À l'intérieur de l'espace dédié au compostage II sont disposés de manière superposée, un compartiment de compostage supérieur 1, au moins un compartiment de compostage intermédiaire 2 et un compartiment de compostage inférieur 3. Dans la suite de la description, les compartiments de compostage supérieur 1, intermédiaire 2 et inférieur 3 pourront être regroupés sous le nom de compartiments de compostage pour décrire des caractéristiques communes. Les compartiments de compostage 1, 2, 3 peuvent être réalisés de toute manière appropriée en métal, en bois, ou en plastique notamment transparent permettant à un utilisateur de visualiser l'intérieur des compartiments de compostage 1, 2, 3 depuis l'extérieur.

Selon l'invention, le compartiment de compostage supérieur 1 se présente sous la forme d'un cadre de compostage 1A délimitant un espace tridimensionnel dont la projection verticale est par exemple un rectangle. Le cadre de compostage 1A comporte ainsi deux parois latérales opposées reliées par une paroi arrière et une paroi avant. Selon un mode de réalisation décrit sur les Figures, le compartiment de compostage supérieur 1 est monté fixe sur le châssis A. Le compartiment de compostage supérieur 1 possède un fond mobile 1B. À l'opposé de ce fond mobile 1B, le compartiment de compostage supérieur 1 admet une section de réception 1C, destinée à accueillir du compost récent composé de déchets organiques et/ou de matières sèches. La section de réception 1C est apte à être recouverte par une paroi de fermeture F, qui, selon le mode de réalisation décrit sur la Figure 2 notamment, est un couvercle F monté en liaison pivot d'axe horizontal sur le châssis A. Ce couvercle F permet à l'utilisateur d'accéder à l'intérieur du compartiment de compostage supérieur 1 par le dessus du système de compostage I. De plus, le système de compostage I s'inscrivant dans une technique de compostage favorisant l'aération du compost, la partie supérieure de la paroi arrière du compartiment de compostage supérieur 1 comporte de préférence, des trous d'aération 1T.

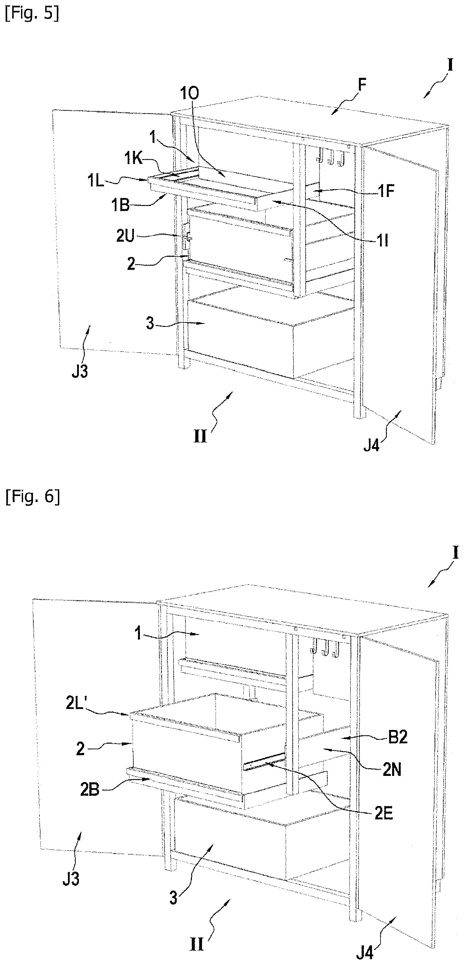

Le fond mobile 1B du compartiment de compostage supérieur 1 peut être manoeuvré à partir de la façade du système de compostage I en rentrant ou sortant par rapport à la paroi avant du cadre de compostage 1A. Le fond mobile 1B du compartiment de compostage supérieur 1 peut occuper deux positions, à savoir d'une part, une position ouverte délimitant une section d'évacuation 1D entre le bord arrière du fond mobile 1B et les deux parois latérales et la paroi arrière du cadre de compostage 1A, et d'autre part, une position fermée pour laquelle le fond mobile 18 obture la section d'évacuation 1D. Dans cette position fermée, le fond mobile 1B obture complètement l'espace inférieur du cadre de compostage 1A. Lors de l'utilisation du système de compostage I, le fond mobile 1B permet alors soit de retenir le compost dans le compartiment de compostage supérieur 1 en occupant une position fermée (Figures 1-2), soit de laisser tomber directement le compost dans le compartiment de compostage intermédiaire 2 situé en dessous en occupant une position ouverte (Figure 5).

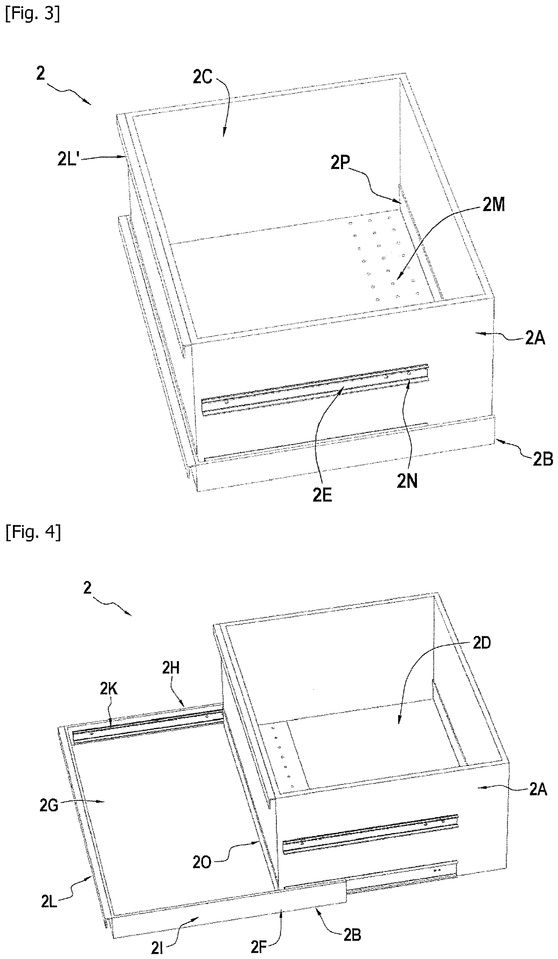

Selon un mode de réalisation décrit précisément sur les Figures 3 et 4, le système de compostage I comporte un compartiment de compostage intermédiaire 2 placé au-dessous du compartiment de compostage supérieur 1. Le compartiment de compostage intermédiaire 2 se présente sous la forme d'un cadre de compostage 2A délimitant un espace tridimensionnel dont la projection verticale est par exemple un rectangle. Le cadre de compostage 2A comporte ainsi deux parois latérales opposées reliées par une paroi arrière et une paroi avant. Le mode de réalisation décrit sur les Figures comporte un seul compartiment de compostage intermédiaire 2. Cependant, un système de compostage I conforme à l'invention peut en comporter plusieurs montés de manière superposée. Chaque compartiment de compostage intermédiaire 2 possède un fond mobile 2B. À l'opposé de ce fond mobile 2B, le compartiment de compostage intermédiaire 2 admet une section d'ouverture 2C, destinée à accueillir du compost issu du compartiment de compostage supérieur 1 situé au-dessus.

Le fond mobile 2B du compartiment de compostage intermédiaire 2 peut être manoeuvré à partir de la façade du système de compostage I en rentrant ou sortant par rapport à la paroi avant du cadre de compostage 2A de ce compartiment 2. Le fond mobile 2B peut occuper deux positions, à savoir d'une part, une position ouverte délimitant une section d'évacuation 2D entre le bord arrière du fond mobile 2B et les deux parois latérales et la paroi arrière du cadre de compostage 2A, et d'autre part, une position fermée pour laquelle le fond mobile 2B obture la section d'évacuation 2D. Lors de l'utilisation du système de compostage I, le fond mobile 2B permet alors soit de retenir le compost dans le compartiment de compostage intermédiaire 2 en occupant une position fermée (Figure 3), soit de laisser tomber le compost dans le compartiment de compostage inférieur 3 situé en dessous en occupant une position ouverte (Figure 4).

Selon l'invention, chaque compartiment de compostage intermédiaire 2 se présente sous la forme d'un tiroir. Le compartiment de compostage intermédiaire 2 est alors monté sur le châssis A par une liaison glissière 2E, réalisée de toute manière appropriée et présentant une direction horizontale de translation de l'avant à l'arrière du système de compostage I. Les Figures montrent un mode de réalisation de la liaison glissière 2E composée de deux rails fixés sur l'extérieur des deux parois latérales du cadre 2A du compartiment de compostage intermédiaire 2 coopérant avec deux rails complémentaires chacun fixé sur une traverse B2 disposées de part et d'autre du compartiment de compostage intermédiaire 2 et fixées d'un côté sur les demi-tubes verticaux B1 et de l'autre côté sur les deux tubes verticaux B. La liaison glissière 2E permet au compartiment de compostage intermédiaire 2 d'occuper soit une position rentrée, représentée notamment sur les Figures 1-2-5 dans laquelle la section d'ouverture 2C est située à l'aplomb de la section d'évacuation 1D du compartiment de compostage supérieur 1, soit une position tirée, représentée notamment sur la Figure 6, permettant à un utilisateur d'accéder par la section d'ouverture 2C à l'intérieur du compartiment de compostage intermédiaire 2. De plus, dans l'optique de faciliter les interventions de l'utilisateur, un système de maintien 2U est aménagé sur le châssis A de manière à maintenir le compartiment de compostage intermédiaire 2 à l'intérieur de l'espace dédié au compostage II lorsque son fond mobile 2B est tiré vers l'extérieur du châssis A. De manière préférée, le système de maintien 2U comporte deux pièces montées en liaison pivot d'axe horizontal sur la structure tubulaire A1 du châssis A de part et d'autre du compartiment de compostage intermédiaire 2. Le système de maintien 2U pouvant occuper une position ouverte pour laquelle le compartiment de compostage intermédiaire 2 peut être tiré en-dehors du châssis A, et une position fermée pour laquelle chaque pièce est tournée sur la paroi avant du cadre 2A du compartiment de compostage intermédiaire 2 et empêche le compartiment de compostage intermédiaire 2 de sortir de l'espace dédié au compostage II.

Selon l'invention, le compartiment de compostage inférieur 3 est situé au-dessous du compartiment de compostage intermédiaire 2 ou du compartiment de compostage intermédiaire 2 situé le plus bas de la série superposée. Le compartiment de compostage inférieur 3 se présente sous la forme d'un cadre de compostage 3A délimitant un espace tridimensionnel dont la projection verticale forme de préférence un rectangle. Ce cadre de compostage 3A comporte ainsi deux parois latérales opposées reliées par une paroi arrière et une paroi avant. Le compartiment de compostage inférieur 3 dispose d'un fond fixe 3B et est destiné à récupérer le compost mûr. Par exemple, le compartiment de compostage inférieur 3 est disposé libre sur le plateau de fond E du système de compostage I et est accessible depuis la façade du système de compostage I, permettant à un utilisateur de prendre facilement le compartiment de compostage inférieur 3 depuis l'extérieur.

Les Figures décrivent un mode de réalisation préféré selon lequel le compartiment de compostage supérieur 1 est monté de manière amovible sur le châssis A. Le compartiment de compostage supérieur 1 peut occuper une position retirée pour laquelle le compartiment de compostage 1 n'est pas monté sur le châssis A et une position fixée pour laquelle le compartiment de compostage 1 est monté sur le châssis A. La position fixée est caractérisée en ce que le compartiment de compostage supérieur 1 est monté sur le châssis A à l'aide de deux épaulements 1Q, 1R s'étendant en saillie respectivement sur la paroi avant et sur la paroi arrière à la partie supérieure du compartiment de compostage supérieur 1. Ces épaulements 1Q, 1R sont destinés à s'emboîter respectivement dans des traverses de soutien K1, K2 du compartiment de compostage supérieur 1, chacune montée sur la partie supérieure du châssis A dans une gorge des tubes horizontaux C. Le compartiment de compostage supérieur 1 est amovible, c'est-à-dire qu'un utilisateur peut le retirer par le dessus de l'espace dédié au compostage II par exemple pour le nettoyer. Pour aider la manipulation du compartiment de compostage supérieur 1, les parois latérales opposées dudit compartiment de compostage supérieur 1 sont chacune pourvues d'une ouverture 1S permettant à un utilisateur d'y placer ses mains pour prendre le compartiment de compostage supérieur 1. Selon un autre mode de réalisation non illustré sur les Figures, le compartiment de compostage supérieur 1 est monté fixe sur le châssis A de sorte que ledit compartiment de compostage supérieur 1 fasse partie intégrante du châssis A. Un autre mode de réalisation non illustré sur les Figures est un compartiment de compostage supérieur 1 se présentant sous la forme d'un tiroir. Dans ce cas, le compartiment de compostage supérieur 1 est monté sur le châssis A de la même manière que le compartiment de compostage intermédiaire 2. De même, l'accès à l'intérieur du compartiment de compostage supérieur 1 se faisant en tirant le compartiment de compostage supérieur 1 en-dehors du châssis A, la paroi de fermeture F est fixée au châssis A. Ce mode de réalisation permet à un utilisateur d'utiliser le dessus de la paroi de fermeture F pour y placer une jardinière par exemple.

Selon un mode de réalisation, le fond mobile 1B et le fond mobile 2B, équipant respectivement le compartiment de compostage supérieur 1 et le compartiment de compostage intermédiaire 2, comportent les mêmes éléments constitutifs. La description qui suit concerne les compartiments de compostage à fond mobile c'est-à-dire le compartiment de compostage supérieur 1 et le compartiment de compostage intermédiaire 2, même si la description est faite en relation des Figures 3 et 4 qui illustrent uniquement le compartiment de compostage intermédiaire 2.

Un compartiment de compostage à fond mobile (supérieur 1 et intermédiaire 2) comporte un fond mobile 1B, 2B formé d'une plaque de fond 1G, 2G équipée de deux bords latéraux opposés 1H, 1I et 2H, 2I reliés par un panneau de façade 1J, 2J. Lorsque le fond mobile 1B, 2B occupe une position fermée (Figure 3), la plaque de fond 1G, 2G est destinée à retenir le compost à l'intérieur du compartiment de compostage supérieur 1 et intermédiaire 2. Le fond mobile 1B, 2B est monté en liaison glissière 1K, 2K d'axe horizontal sur le compartiment de compostage 1, 2 à fond mobile. La liaison glissière 1K, 2K est réalisée de toute manière appropriée et de préférence, par deux rails de guidage horizontal montés sur l'extérieur des parois latérales du cadre de compostage 1A, 2A coopérant avec deux rails de guidage horizontal complémentaires, montés chacun sur l'intérieur des bords latéraux opposés 1H, 1I et 2H, 2I du fond mobile 1B, 2B. Avantageusement, le panneau de façade 1J, 2J est équipé d'une poignée 1L, 2L ou analogue, permettant à un utilisateur de tirer le fond mobile 1B, 2B vers l'extérieur du châssis A.

Selon une caractéristique avantageuse de réalisation, la plaque de fond 1G, 2G du fond mobile 1B, 2B des compartiments de compostage supérieur 1 et intermédiaire 2 est pourvue de trous d'évacuation respectivement 1M, 2M du jus de compost, destinés à être traversés par le jus de compost vers la section d'ouverture 2C, 3C du compartiment de compostage 2, 3 disposé en dessous. Selon un autre mode de réalisation du fond mobile 1B, 2B permettant de faciliter l'évacuation du jus de compost, la plaque de fond 1G, 2G est incurvée vers le bas en direction des trous d'évacuation 1M, 2M du jus de compost.

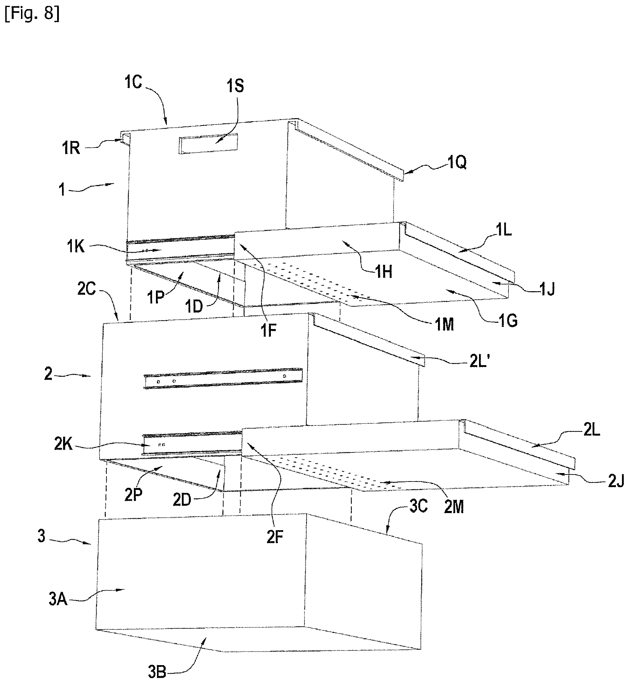

Selon une autre caractéristique avantageuse de réalisation, un système de butée 1F, 2F est inclus dans la liaison glissière 1K, 2K entre le compartiment de compostage supérieur 1 et intermédiaire 2 et son fond mobile respectivement 1B, 2B. Le système de butée 1F, 2F étant réalisé de préférence par la butée de la liaison glissière 1K, 2K. La Figure 8 montre la disposition des compartiments de compostage 1, 2, 3 lorsque le compartiment de compostage intermédiaire 2 est en position rentrée dans le châssis A et que les fonds mobiles 1B, 2B des compartiments de compostage supérieur 1 et intermédiaire 2 occupent une position ouverte de manière à ne plus obturer la section d'évacuation 1D, 2D de ces compartiments de compostage 1, 2. Selon cette caractéristique, le système de butée 1F, 2F est réalisé de manière que lorsque le fond mobile 1B, 2B occupe une position ouverte, la projection verticale de la section d'évacuation 1D du compartiment de compostage supérieur 1 soit incluse dans la section d'ouverture 2C du compartiment de compostage intermédiaire 2 et la projection verticale de la section d'évacuation 2D du compartiment de compostage intermédiaire 2 soit incluse dans la section d'ouverture 3C du compartiment de compostage inférieur 3. De plus, ce système de butée 1F, 2F est configuré de manière que lorsque les fonds mobiles 1B, 2B occupent une position ouverte, la projection verticale des trous d'évacuation 1M du fond mobile 1B du compartiment de compostage supérieur 1 est comprise dans la section d'ouverture 2C du compartiment de compostage intermédiaire 2 et la projection verticale des trous d'évacuation 2M du fond mobile 2B du compartiment de compostage intermédiaire 2 est comprise dans la section d'ouverture 3C du compartiment de compostage inférieur 3. Le système de butée 1F, 2F permet d'éviter une évacuation du jus de compost en-dehors du compartiment de compostage 2, 3 situé en dessous.

Selon une caractéristique avantageuse de l'invention, chaque compartiment de compostage à fond mobile 1, 2 comporte un système d'étanchéité 1O, 1P et 2O, 2P pour maintenir les déchets organiques à l'intérieur des compartiments de compostage 1, 2 ayant un fond mobile lorsque le fond mobile est tiré vers une position ouverte. Comme représenté sur les Figures, le système d'étanchéité 1O, 1P et 2O, 2P est aménagé entre la plaque de fond 1G, 2G d'un fond mobile 1B, 2B et l'extrémité inférieure d'un cadre 1A, 2A du compartiment de compostage 1, 2. Selon une caractéristique avantageuse de réalisation, le système d'étanchéité 1O, 1P et 2O, 2P est aménagé entre la plaque de fond 1G, 2G d'un fond mobile 1B, 2B et l'extrémité inférieure de la paroi avant et également de préférence de la paroi arrière d'un cadre 1A, 2A. Un mode de réalisation préféré du système d'étanchéité 1O, 1P et 2O, 2P est une brosse d'étanchéité, mais d'autres modes de réalisation comme un joint d'étanchéité conviennent à ce système.

Selon une autre caractéristique avantageuse de réalisation, un système de butée 2N est inclus dans la liaison glissière 2E entre le compartiment de compostage intermédiaire 2 et le châssis A. Ce système de butée 2N est réalisé de toute manière appropriée, de préférence par la butée de la liaison glissière 2E, et est aménagé, comme illustré sur la Figure 6, de sorte que lorsque le compartiment de compostage intermédiaire 2 est tiré hors de l'espace dédié au compostage II et que son fond mobile 2B occupe une position fermée, la projection verticale des trous d'évacuation 2M sont compris dans la section d'ouverture 3D du compartiment de compostage inférieur 3 situé en dessous (Figure 8).

Selon un mode de réalisation de l'invention préféré décrit sur les Figures, la liaison glissière 2E entre le compartiment de compostage intermédiaire 2 et le châssis A demande à un utilisateur de tirer ou de pousser manuellement le compartiment de compostage 2 respectivement pour le sortir ou le rentrer dans l'espace dédié au compostage II. Pour aider l'utilisateur à tirer le compartiment de compostage intermédiaire 2, la paroi avant du cadre de compostage 2A est équipée d'une poignée 2L' ou d'un système analogue. Cette opération demande un peu de manipulation physique à l'utilisateur. Dans l'objectif de réduire les efforts de l'utilisateur au minimum et de pouvoir traiter des volumes plus importants de compost, un autre mode de réalisation envisageable non décrit sur les Figures est un système d'automatisation permettant de sortir et de rentrer le compartiment de compostage intermédiaire 2 dans l'espace dédié au compostage II sans intervention physique sur le compartiment de compostage 2. Ce système d'automatisation peut se présenter de manière préférée sous la forme d'un vérin double effet, permettant à un utilisateur de commander la sortie ou la rentrée du compartiment de compostage intermédiaire 2. De même, un système d'automatisation peut s'appliquer à un compartiment de compostage 1, 2 ayant un fond mobile, permettant à l'utilisateur de commander l'ouverture ou la fermeture du fond mobile 1B, 2B du compartiment de compostage 1, 2 correspondant.

Selon une caractéristique préférée de l'invention, le système de compostage I peut comporter un système de filtration, non représenté sur les Figures, destiné à empêcher l'intrusion d'insectes à l'intérieur des compartiments de compostage 1, 2, 3. Ce système de filtration se présente sous la forme d'une maille obturant la section supérieure d'un compartiment de compostage, soit la section de réception pour le compartiment de compostage supérieur 1 et la section d'ouverture pour les compartiments de compostage intermédiaire 2 et inférieur 3. Il doit être compris que le système de filtration est amovible afin d'être enlevé avant le remplissage d'un compartiment de compostage 1, 2, 3.

Selon une caractéristique avantageuse de l'invention, le système de compostage I comporte un bac de réserve G pour matières sèches. Les matières sèches peuvent être de la sciure, des copeaux de bois, des morceaux de cartons et sont utiles pour la maturation du compost. Les matières sèches sont utilisées pour être mélangées au compost à différents états de maturation donc dans les compartiments de compostage 1, 2, 3, et particulièrement aux déchets organiques récemment ajoutés c'est-à-dire dans le compartiment de compostage supérieur 1. Selon une caractéristique avantageuse de mise en oeuvre, les matières sèches peuvent être compressées pour se présenter sous la forme d'une cartouche destinée à être insérée dans le bac de réserve G. Il apparaît donc nécessaire de disposer d'un bac de réserve G pour matières sèches à proximité du compartiment de compostage supérieur 1, pour rappeler à l'utilisateur le besoin de rajouter ces matières sèches mais également pour faciliter leurs manipulations notamment pour réduire les risques de faire tomber des matières sèches en-dehors du compartiment de compostage supérieur 1. Pour cela, le bac de réserve G est monté sur le châssis A à proximité de l'espace dédié au compostage II, de manière que sa section supérieure G1 soit comprise dans le même plan horizontal que le plan de la section de réception 1C du compartiment de compostage supérieur 1. Dans l'exemple illustré, le bac de réserve G est monté dans l'espace intérieur du châssis A sur la droite du système de compostage I par rapport à la façade du système de compostage I, dans l'espace délimité entre les deux demi-tubes verticaux B1 et les deux tubes verticaux B situés à l'opposé de ceux délimitant l'espace dédié au compostage II. Le bac de réserve G se présente de manière préférée sous la forme de deux parois latérales reliées par une paroi avant et une paroi arrière, et d'un fond fixe. La section supérieure G1 du bac de réserve G est ouverte, elle représente une ouverture d'accès G1 pour l'utilisateur. Selon un mode de réalisation préféré, la matière du bac de réserve G est en tissu, mais tout autre type de matériau ayant la capacité de contenir de la matière peut être approprié.

Le mode de réalisation décrit sur les Figures montre un compartiment de compostage supérieur 1 monté de manière amovible sur le châssis A. Dans ce cas, le bac de réserve G est aussi monté de manière amovible sur le châssis A. Le bac de réserve G peut alors occuper une position retirée pour laquelle le bac de réserve G n'est pas monté sur le châssis A et une position fixée pour laquelle le bac de réserve G est monté sur le châssis A. La position fixée est caractérisée en ce que le bac de réserve G dispose de deux épaulements G2, G3 s'étendant en saillie sur les faces latérales opposées du bac de réserve G à sa partie supérieure, et destinés à s'emboîter respectivement dans des traverses de soutien K3, K4 du bac de réserve G chacune montée sur la partie supérieure du châssis A dans une gorge des tubes horizontaux C. Selon un autre mode de réalisation non-décrit sur les Figures dans lequel le compartiment de compostage supérieur 1 est de type tiroir, le bac de réserve G est aussi monté sur le châssis A par une liaison glissière d'axe horizontal. Dans ce cas, il est préféré que la liaison glissière entre le compartiment de compostage supérieur 1 et le châssis A et la liaison glissière entre le bac de réserve G et le châssis A soient liées, permettant de tirer à la fois le compartiment de compostage supérieur 1 et le bac de réserve G en-dehors du châssis A.

Lors d'interventions humaines à l'intérieur des compartiments de compostage 1, 2, 3, un utilisateur peut être amené à utiliser des outils pour travailler le compost comme par exemple une petite pelle, une petite griffe ou une paire de gants. Comme le montrent les Figures, le système de compostage I peut comporter un système d'accroche H pour outils. De manière préférée, ce système d'accroche H est fixé en haut du système de compostage I sur la structure tubulaire A1 du châssis A, et se présente sous la forme de crochets.

Une caractéristique du système de compostage I conforme à l'invention est que le système de compostage I peut s'intégrer dans des espaces extérieurs comme intérieurs. D'un point de vue pratique ou visuel, il apparait nécessaire d'intégrer le système de compostage I dans l'environnement qui l'entoure. Le système de compostage I dispose alors d'un système de fixation J pour permettre à des panneaux d'habillage J1 amovibles d'habiller les faces extérieures du système de compostage I. Le mode de réalisation du système de fixation J illustré sur les Figures comporte des aimants J2 fixés sur les panneaux d'habillage J1 aptes à être aimantés à la structure tubulaire A1 métallique du châssis A. Un autre mode de réalisation non décrit sur les Figures se présente sous la forme d'un système d'emboîtage élastique. Le châssis A est équipé sur l'extérieur de pièces femelles d'emboîtage élastique tandis que les panneaux d'habillage J1 sont équipés de pièces mâles d'emboîtage élastique disposés à des emplacements complémentaires des pièces femelles du système d'emboîtage élastique. Dans les deux modes de réalisation, un utilisateur peut facilement fixer, retirer et changer de panneau d'habillage J1 en fonction de l'environnement dans lequel le système de compostage I est installé. Selon un mode de réalisation préféré, deux portes J3, J4 sont montées en liaison pivot d'axe vertical sur la façade du système de compostage I pour permettre de le fermer complètement. Un autre mode de réalisation de la façade du système de compostage I peut être de placer temporairement des panneaux d'habillage J1, pourvus d'un système de fixation à aimants par exemple, pour habiller la façade du système de compostage I.

Afin d'obtenir un compost de bonne qualité, il est nécessaire que la maturation du compost se fasse dans des conditions favorables, en particulier la température et le taux d'humidité du système de compostage I. Dans ce sens, le système de compostage I peut comporter des capteurs, non représentés sur les Figures, notamment de température ou d'humidité à l'intérieur des compartiments de compostage supérieur 1 et intermédiaire 2 permettant à un utilisateur de vérifier les conditions de maturation du compost. Selon un mode de réalisation avantageux, le système de compostage 1 peut comporter un système connecté réalisant le transfert de données entre les capteurs placés dans l'espace dédié au compostage II et une interface utilisateur. Ce système connecté permet à l'utilisateur de connaître à l'aide de l'interface utilisateur des données en temps réel et de savoir ainsi si le compost est maintenu à bonne température, que son taux d'humidité est bon et qu'il est bien aéré.

Un autre objet de l'invention concerne un procédé de compostage de déchets organiques. Le procédé consiste à :
- insérer des déchets organiques par la section de réception 1C dans le compartiment de compostage supérieur 1 ;
- prendre de préférence des matières dans le bac de réserve G pour matières sèches et mélanger les matières avec les déchets organiques dans le compartiment de compostage supérieur 1 ;
- accéder à l'intérieur du compartiment de compostage supérieur 1 et vérifier l'état de maturation du compost ;
- tirer le fond mobile 1B du compartiment de compostage supérieur 1 vers l'extérieur du châssis A pour ouvrir la section d'évacuation 1D pour faire tomber directement sans manipulation, le compost dans le compartiment de compostage intermédiaire 2 situé en dessous ;
- tirer le compartiment de compostage intermédiaire 2 sous forme de tiroir pour accéder au compost, remuer le compost pour aérer, et humidifier le compost grâce au jus de compost issu du compartiment de compostage supérieur 1 situé au-dessus à travers les trous d'évacuation 1M ;
- tirer le fond mobile 2B du compartiment de compostage intermédiaire 2 vers l'extérieur du châssis A pour ouvrir la section d'évacuation 2D pour faire tomber automatiquement sans opérations de manipulation complexes, le compost dans le compartiment de compostage inférieur 3 situé en dessous ;
- répéter les opérations précédentes pour les différents compartiments de compostage supérieur 1 et intermédiaire 2 pour assurer la descente du compost vers un compartiment situé en dessous, en fonction de l'état de maturation du compost ;
- et récupérer le compost mûr dans le compartiment de compostage inférieur 3.

Selon l'invention, le système de compostage I facilite la maturation de déchets organiques en proposant une solution assurant un compost homogène, aéré, avec un bon taux d'humidité. Les compartiments de compostage 1, 2, 3 représentent un avantage pour la maturation du compost car les matières sont mélangées au même stade de maturation, permettant un processus de maturation homogène. De plus, les compartiments de compostage supérieur 1 et intermédiaire 2 étant ouverts sur leur partie supérieure 1C, 2C et leur fond mobile 1B, 2B étant pourvu de trous d'évacuation 1M, 2M, l'air circule librement au sein de l'espace dédié au compostage II pendant le processus de maturation, assurant une bonne aération du compost. Les trous d'évacuation 1M, 2M présentent un avantage car ils permettent de maintenir un compost humide dans tous les compartiments de compostage 1, 2, 3. Enfin, le système de filtration assure une libre circulation des gaz au sein du système de compostage I tout en empêchant l'intrusion d'insectes au sein des compartiments de compostage 1, 2, 3.

Selon l'invention, le système de compostage 1 présente des avantages pour l'utilisateur. L'accès à l'intérieur de chaque compartiment de compostage 1, 2, 3 étant facile, un utilisateur peut intervenir sur le compost en fournissant peu d'effort, par exemple après avoir tiré hors du châssis A le compartiment de compostage intermédiaire 2. Un utilisateur peut vérifier visuellement l'état de chaque compost contenu dans les compartiments de compostage 1, 2, 3 et choisir de réaliser une opération de mélange, d'aération, d'humidification du compost ou de rajout de matières sèches dans un compartiment de compostage 1, 2, 3. De plus, la disposition des compartiments de compostage 1, 2, 3 est avantageuse car elle permet une transition du compost d'un compartiment de compostage à l'intérieur du compartiment de compostage situé en dessous sans opération de transvasement compliquée et sans occasionner de perte de compost à côté du compartiment de compostage. Les deux bords latéraux opposés 1H, 1I et 2H, 2I des fonds mobiles 1B, 2B présentent un avantage car ils servent à retenir le jus de compost à l'intérieur des compartiments de compostage supérieur 1 et intermédiaire 2 et donc à éviter un écoulement du jus de compost en dehors de ces compartiments de compostage 1, 2.

De plus, le bac de réserve G pour matières sèches étant disposé de manière avantageuse à proximité du compartiment de compostage supérieur 1, cela permet à un utilisateur de prendre des matières sèches dans le bac de réserve G et de les mélanger avec les déchets organiques dans le compartiment de compostage supérieur 1 sans en renverser à côté. De plus, le bac de réserve G pour matières sèches étant disposé à proximité de l'espace dédié au compostage II, en cas de rajout nécessaire de matières sèches à l'intérieur des compartiments de compostage intermédiaire 2 et inférieur 3, l'utilisateur peut facilement prendre des matières sèches dans le bac de réserve G pour matières sèches et les mélanger au compost contenu dans les compartiments de compostage 2, 3. Les matières sèches présentent un avantage pour l'aération du compost et l'absorption de l'humidité avec un faible impact écologique, il est donc intéressant d'encourager l'utilisateur à utiliser ces matières sèches pour aider la maturation du compost.

## Revendications

1. Système de compostage (I) de déchets organiques comportant un châssis (A) délimitant un espace dédié au compostage (II) de déchets organiques et dans lequel sont disposés :
- un compartiment de compostage supérieur (1), monté sur le châssis (A) et présentant à l'opposé d'un fond mobile (1B), une section de réception (1C) pour les déchets organiques apte à être obturée par une paroi de fermeture (F), le fond mobile (1B) occupant soit une position ouverte délimitant une section d'évacuation (1D) pour les déchets organiques en laissant tomber le compost soit une position fermée pour obturer la section d'évacuation (1D) ;
- au moins un compartiment de compostage intermédiaire (2) de type tiroir, disposé en dessous du compartiment de compostage supérieur (1), et présentant à l'opposé d'un fond mobile (2B), une section d'ouverture (2C) adaptée pour recevoir les déchets provenant de la section d'évacuation (1D) du compartiment de compostage supérieur (1), ce compartiment de compostage intermédiaire (2) étant monté sur le châssis (A) par une liaison glissière (2E) d'axe horizontal lui permettant d'occuper soit une position rentrée dans laquelle la section d'ouverture (2C) est située à l'aplomb de la section d'évacuation (1D) du compartiment de compostage supérieur (1) soit une position tirée hors du châssis (A) pour accéder à l'intérieur du compartiment de compostage intermédiaire (2), le fond mobile (2B) occupant soit une position ouverte délimitant une section d'évacuation (2D) pour les déchets organiques en laissant tomber le compost soit une position fermée pour obturer la section d'évacuation (2D) ;
- un compartiment de compostage avec fond mobile (1, 2) comportant une liaison glissière (1K, 2K) entre un cadre (1A, 2A) et un fond mobile (1B, 2B), la liaison glissière (1K, 2K) entre le cadre (1A, 2A) et le fond mobile (1B, 2B) d'un compartiment de compostage (1, 2) comportant des rails fixés sur l'intérieur des bords latéraux (1H, 1I et 2H, 2I) du fond mobile (1B, 2B) et coopérant avec des rails complémentaires fixés sur l'extérieur des parois latérales du cadre (1A, 2A) ;
- et un compartiment de compostage inférieur (3), disposé en bas de l'espace dédié au compostage (II), présentant une section d'ouverture (3C) située à l'aplomb de la section d'évacuation (2D) du compartiment de compostage intermédiaire (2) situé au-dessus.

2. Système selon la revendication précédente, selon lequel la section d'évacuation d'un compartiment de compostage est aménagée de manière que sa projection verticale soit incluse dans la section d'ouverture du compartiment de compostage situé en dessous.

3. Système selon l'une des revendications précédentes, selon lequel la paroi de fermeture (F) est un couvercle.

4. Système selon l'une des revendications précédentes, selon lequel le compartiment de compostage supérieur (1) est de type tiroir, et la paroi de fermeture (F) est fixe.

5. Système selon l'une des revendications précédentes, selon lequel le fond mobile (1B, 2B) d'un compartiment de compostage (1, 2) est pourvu de trous d'évacuation (1M, 2M) et en ce que la liaison glissière (1K, 2K) entre le cadre (1A, 2A) et le fond mobile (1B, 2B) est pourvue d'un système de butée (1F,2F), de sorte qu'en position tirée du compartiment de compostage (1, 2), les trous d'évacuation (1M, 2M) restent compris dans la section d'ouverture (2C, 3C) du compartiment de compostage (2, 3) situé en dessous.

6. Système selon l'une des revendications précédentes, selon lequel le fond mobile (1B, 2B) d'un compartiment de compostage (1, 2) est formé d'une plaque de fond (1G, 2G) équipée de deux bords latéraux (1H, 1I et 2H, 2I) reliés par un panneau de façade (1J, 2J), un système d'étanchéité (1O, 1P et 2O, 2P) étant aménagé entre le fond mobile (1B, 2B) et le cadre (1A, 2A) pour maintenir les déchets organiques à l'intérieur du compartiment de compostage (1, 2).

7. Système selon l'une des revendications précédentes, selon lequel la liaison glissière (2E) entre le compartiment de compostage (2) de type tiroir et le châssis (A) comporte un système de butée (2N), empêchant le compartiment de compostage (2) de sortir complètement du châssis (A).

8. Système selon l'une des revendications précédentes, selon lequel le châssis (A) comporte un bac de réserve (G) pour matières sèches, disposé à proximité de l'espace dédié au compostage (II) et présente une ouverture d'accès (G1) s'étendant dans un plan sensiblement coplanaire avec le plan de la section de réception (1C) du compartiment de compostage supérieur (1).

9. Système selon la revendication précédente, selon lequel le bac de réserve (G) est configuré pour recevoir une cartouche de matières sèches compressées.

10. Système selon l'une des revendications précédentes, selon lequel le châssis (A) comporte une structure tubulaire (A1) équipée de panneaux d'habillage (J1) montés sur le châssis (A) à l'aide d'un système de fixation (J) amovible.

11. Procédé de compostage mis en oeuvre à l'aide d'un système conforme à l'une des revendications 1 à 10, consistant à :
- insérer des déchets organiques dans le compartiment de compostage supérieur (1) ;
- prendre des matières dans le bac de réserve (G) pour matières sèches et mélanger les matières avec les déchets organiques dans le compartiment de compostage supérieur (1) ;
- accéder à l'intérieur du compartiment de compostage supérieur (1) et vérifier l'état de maturation du compost ;
- tirer le fond mobile (1B) du compartiment de compostage supérieur (1) vers l'extérieur du châssis (A) pour ouvrir le compartiment de compostage supérieur (1) et pour faire tomber le compost dans le compartiment de compostage intermédiaire (2) situé en dessous ;
- tirer un compartiment de compostage intermédiaire (2) de type tiroir pour accéder au compost, remuer le compost pour l'aérer, et humidifier le compost grâce au jus de compost transmis d'un compartiment de compostage supérieur (1) à un compartiment de compostage intermédiaire (2) situé en dessous à travers les trous d'évacuation (1M) ;
- tirer le fond mobile (2B) du compartiment de compostage intermédiaire (2) vers l'extérieur du châssis (A) pour ouvrir le compartiment de compostage intermédiaire (2) et pour faire tomber le compost dans le compartiment de compostage inférieur (3) ;
- répéter les opérations pour assurer la descente du compost vers les compartiments de compostage inférieurs en fonction de son état de maturation ;
- et récupérer le compost mûr dans le compartiment de compostage inférieur (3).

## Patentansprüche

1. Kompostiersystem (I) für organische Abfälle, das ein Gestell (A) beinhaltet, das einen Raum begrenzt, welcher der Kompostierung (II) von organischen Abfällen dient, und in dem angeordnet sind:
- ein oberes Kompostierfach (1), das an dem Gestell (A) montiert ist und gegenüber einem beweglichen Boden (1B) einen Aufnahmeabschnitt (1C) für die organischen Abfälle aufweist, der durch eine Verschlusswand (F) verschließbar ist, wobei der bewegliche Boden (1B) entweder eine offene Position, die einen Ablaufabschnitt (1D) für die organischen Abfälle begrenzt, indem der Kompost fallen gelassen wird, oder eine geschlossene Position einnimmt, um den Ablaufabschnitt (1D) zu verschließen,
- mindestens ein mittleres Kompostierfach (2) vom Schubladentyp, das unter dem oberen Kompostierfach (1) angeordnet ist und gegenüber einem beweglichen Boden (2B) einen Öffnungsabschnitt (2C) aufweist, der dazu ausgelegt ist, die Abfälle aufzunehmen, die von dem Ablaufabschnitt (1D) des oberen Kompostierfachs (1) kommen, wobei dieses mittlere Kompostierfach (2) an dem Gestell (A) durch eine Gleitverbindung (2E) mit einer horizontalen Achse montiert ist, die ihm ermöglicht, entweder eine eingezogene Position, in der sich der Öffnungsabschnitt (2C) senkrecht zu dem Ablaufabschnitt (1d) des oberen Kompostierfachs (1) befindet, oder eine aus dem Gestell (A) herausgezogene Position einzunehmen, um auf das Innere des mittleren Kompostierfachs (2) zuzugreifen, wobei der bewegliche Boden (2B) entweder eine offene Position, die einen Ablaufabschnitt (2D) für die organischen Abfälle begrenzt, indem der Kompost fallen gelassen wird, oder eine geschlossene Position einnimmt, um den Ablaufabschnitt (2D) zu verschließen,
- ein Kompostierfach mit beweglichem Boden (1, 2), das eine Gleitverbindung (1K, 2K) zwischen einem Rahmen (1A, 2A) und einem beweglichen Boden (1B, 2B) beinhaltet, wobei die Gleitverbindung (1K, 2K) zwischen dem Rahmen (1A, 2A) und dem beweglichen Boden (1B, 2B) eines Kompostierfachs (1, 2) Schienen beinhaltet, die an dem Inneren der Seitenkanten (1H, 1I und 2H, 2I) des beweglichen Bodens (1B, 2B) befestigt sind und mit komplementären Schienen zusammenwirken, die an der Außenseite der Seitenwände des Rahmens (1A, 2A) befestigt sind,
- und ein unteres Kompostierfach (3), das am Boden des Raums (II) angeordnet ist, welcher der Kompostierung (II) dient, und einen Öffnungsabschnitt (3C) aufweist, der sich senkrecht zu dem Ablaufabschnitt (2D) des sich darüber befindlichen mittleren Kompostierfachs (2) befindet.

2. System nach dem vorhergehenden Anspruch, wobei der Ablaufabschnitt eines Kompostierfachs so angeordnet ist, dass sein vertikaler Vorsprung in den Öffnungsabschnitt des sich darunter befindlichen Kompostierfachs eingeschlossen ist.

3. System nach einem der vorhergehenden Ansprüche, wobei die Verschlusswand (F) ein Deckel ist.

4. System nach einem der vorhergehenden Ansprüche, wobei das obere Kompostierfach (1) vom Schubladentyp ist und die Verschlusswand (F) feststehend ist.

5. System nach einem der vorhergehenden Ansprüche, wobei der bewegliche Boden (1B, 2B) eines Kompostierfachs (1, 2) mit Ablauflöchern (1M, 2M) versehen ist und die Gleitverbindung (1K, 2K) zwischen dem Rahmen (1A, 2A) und dem beweglichen Boden (1B, 2B) mit einem Anschlagsystem (1F, 2F) versehen sind, sodass in der herausgezogenen Position des Kompostierfachs (1, 2) die Ablauflöcher (1M, 2M) in dem Öffnungsabschnitt (2C, 3C) des sich darunter befindlichen Kompostierfachs (2, 3) verbleiben.

6. System nach einem der vorhergehenden Ansprüche, wobei der bewegliche Boden (1B, 2B) eines Kompostierfachs (1, 2) durch eine Bodenplatte (1G, 2G) gebildet ist, die mit zwei seitlichen Rändern (1H, 1I und 2H, 2I) ausgestattet ist, die durch eine Frontplatte (1J, 2J) verbunden sind, wobei ein Dichtungssystem (1O, 1P und 2O, 2P) zwischen dem beweglichen Boden (1B, 2B) und dem Rahmen (1A, 2A) angeordnet ist, um die organischen Abfälle im Inneren des Kompostierfachs (1, 2) zu halten.

7. System nach einem der vorhergehenden Ansprüche, wobei die Gleitverbindung (2E) zwischen dem Kompostierfach (2) vom Schubladentyp und dem Gestell (A) ein Anschlagsystem (2N) beinhaltet, das verhindert, dass das Kompostierfach (2N) vollständig aus dem Gestell (A) heraustritt.

8. System nach einem der vorhergehenden Ansprüche, wobei das Gestell (A) einen Vorratsbehälter (G) für Trockenmaterialien beinhaltet, der in der Nähe des Raums angeordnet ist, welcher der Kompostierung (II) dient, und eine Zugangsöffnung (G1) aufweist, die sich in einer Ebene erstreckt, die im Wesentlichen koplanar mit der Ebene des Aufnahmeabschnitts (1C) des oberen Kompostierfachs (1) ist.

9. System nach dem vorhergehenden Anspruch, wobei der Vorratsbehälter (G) dazu ausgestaltet ist, einen Einsatz mit komprimierten Trockenmaterialien aufzunehmen.

10. System nach einem der vorhergehenden Ansprüche, wobei das Gestell (A) eine röhrenförmige Struktur (A1) beinhaltet, die mit Verkleidungsplatten (J1) ausgestattet ist, die mit Hilfe eines abnehmbaren Befestigungssystems (J) an dem Gestell (A) montiert sind.

11. Kompostierverfahren, das mit Hilfe eines Systems nach einem der Ansprüche 1 bis 10 durchgeführt wird, bestehend aus:
- Einbringen von organischen Abfällen in das obere Kompostierfach (1),
- Entnehmen von Materialien aus dem Vorratsbehälter (G) für Trockenmaterialien und Mischen der Materialien mit den organischen Abfällen in dem oberen Kompostierfach (1),
- Zugreifen auf das Innere des oberen Kompostierfachs (1) und Prüfen des Reifezustands des Komposts,
- Herausziehen des beweglichen Bodens (1B) des oberen Kompostierfachs (1) in Richtung der Außenseite des Gestells (A), um das obere Kompostierfach (1) zu öffnen und um den Kompost in das sich darunter befindliche mittlere Kompostierfach (2) fallen zu lassen,
- Herausziehen eines mittleren Kompostierfachs (2) vom Schubladentyp, um auf den Kompost zuzugreifen, Rühren des Komposts, um ihn zu belüften, und Befeuchten des Komposts mit dem Kompostsaft, der durch die Ablauflöcher (1M) von einem oberen Kompostierfach (1) zu einem sich darunter befindlichen mittleren Kompostierfach (2) übertragen wird,
- Herausziehen des beweglichen Bodens (2B) des mittleren Kompostierfachs (2) in Richtung der Außenseite des Gestells (A), um das mittlere Kompostierfach (2) zu öffnen und um den Kompost in das untere Kompostierfach (3) fallen zu lassen,
- Wiederholen der Vorgänge, um sicherzustellen, dass der Kompost abhängig von seinem Reifezustand in die unteren Kompostierfächer fällt,
- und Sammeln des reifen Komposts in dem unteren Kompostierfach (3).

## Claims

1. A system for composting (I) organic waste including a chassis (A) delimiting a space dedicated to the composting (II) of organic waste and in which are disposed;
- an upper composting compartment (1), mounted on the chassis (A) and having, opposite a movable bottom (1B), a receiving section (1C) for the organic waste able to be obturated by a closing wall (F), the movable bottom (1B) occupying either an open position delimiting a discharge section (1D) for the organic waste by dropping the compost or a closed position to obdurate the discharge section (1D);
- at least one drawer-type intermediate composting compartment (2), disposed below the upper composting compartment (1), and having, opposite a movable bottom (2B), an opening section (2C) adapted to receive the waste coming from the discharge section (1D) of the upper composting compartment (1), this intermediate composting compartment (2) being mounted on the chassis (A) by a sliding connection (2E) with a horizontal axis allowing it to occupy either a retracted position in which the opening section (2C) is located in line with the discharge section (1D) of the upper composting compartment (1) or a position pulled out of the chassis (A) to access the interior of the intermediate composting compartment (2), the movable bottom (2B) occupying either an open position delimiting a discharge section (2D) for the organic waste by dropping the compost or a position closed to obturate the discharge section (2D);
- a composting compartment with movable bottom (1, 2) including a sliding connection (1K, 2K) between a frame (1A, 2A) and a movable bottom (1B, 2B), the sliding connection (1K, 2K) between the frame (1A, 2A) and the movable bottom (1B, 2B) of a composting compartment (1, 2) including rails fixed on the inside of the side edges (1H, 1I and 2H, 2I) of the movable bottom (1B, 2B) and cooperating with complementary rails fixed on the outside of the side walls of the frame (1A, 2A);
- and a lower composting compartment (3), disposed at the bottom of the space dedicated to the composting (II), having an opening section (3C) located in line with the discharge section (2D) of the intermediate composting compartment (2) located above.

2. The system according to the preceding claim, according to which the discharge section of a composting compartment is arranged such that its vertical projection is included in the opening section of the composting compartment located below.

3. The system according to any of the preceding claims, according to which the closing wall (F) is a cover.

4. The system according to any of the preceding claims, according to which the upper composting compartment (1) is of the drawer type, and the closing wall (F) is fixed.

5. The system according to any of the preceding claims, according to which the movable bottom (1B, 2B) of a composting compartment (1, 2) is provided with discharge holes (1M, 2M) and to which the sliding connection (1K, 2K) between the frame (1A, 2A) and the movable bottom (1B, 2B) is provided with an abutment system (1F, 2F), so that in the pulled position of the composting compartment (1, 2), the discharge holes (1M, 2M) remain comprised in the opening section (2C, 3C) of the composting compartment (2, 3) located below.

6. The system according to any of the preceding claims, according to which the movable bottom (1B, 2B) of a composting compartment (1, 2) is formed of a bottom plate (1G, 2G) equipped with two side edges (1H, 1I and 2H, 2I) connected by a front panel (1J, 2J), a sealing system (1O, 1P and 2O, 2P) being arranged between the movable bottom (1B, 2B) and the frame (1A, 2A) for keeping the organic waste inside the composting compartment (1, 2).

7. The system according to any of the preceding claims, according to which the sliding connection (2E) between the drawer-type composting compartment (2) and the chassis (A) includes an abutment system (2N) preventing the composting compartment (2) from coming completely out of the chassis (A).

8. The system according to any of the preceding claims, according to which the chassis (A) includes a storage tank (G) for dry matter, disposed in the vicinity of the space dedicated to the composting (II) and has an access opening (G1) extending in a plane substantially coplanar with the plane of the receiving section (1C) of the upper composting compartment (1).

9. The system according to the preceding claim, according to which the storage tank (G) is configured to receive a cartridge of compressed dry matter.

10. The system according to any of the preceding claims, according to which the chassis (A) includes a tubular structure (A1) equipped with trim panels (J1) mounted on the chassis (A) using a removable fixing system (J).

11. A composting method implemented using a system according to any of claims 1 to 10, consisting of:
- inserting organic waste into the upper composting compartment (1);
- taking matter from the storage tank (G) for dry matter and mixing the matter with the organic waste in the upper composting compartment (1);
- accessing the interior of the upper composting compartment (1) and checking the state of maturation of the compost;
- pulling the movable bottom (1B) of the upper composting compartment (1) towards the outside of the chassis (A) to open the upper composting compartment (1) and to drop the compost into the intermediate composting compartment (2) located below;
- pulling a drawer-type intermediate composting compartment (2) to access the compost, stirring the compost to aerate it, and moistening the compost with the compost juice transmitted from an upper composting compartment (1) to an intermediate composting compartment (2) located below, through the discharge holes (1M);
- pulling the movable bottom (2B) of the intermediate composting compartment (2) towards the outside of the chassis (A) to open the intermediate composting compartment (2) and to drop the compost into the lower composting compartment (3);
- repeating the operations to ensure the descent of the compost towards the lower composting compartments according to its state of maturation;
- and recovering the mature compost in the lower composting compartment (3).
